# EUROPEAN PATENT APPLICATION

(11) **EP 1 059 772 A2**
(43) Date of publication of application: **13.12.2000**
(21) Application number: 00401500.4
(22) Date of filing: 26.05.2000
(51) Int. Cl.: H04L 12/437

(54) **Method of recovering failed unidirectional broadcast paths in telecommunications transoceanic MS-SP rings**

(30) Priority: 09.06.1999 IT MI991276
(71) Applicant: ALCATEL, 75008 Paris (FR)
(72) Inventor: De Girolamo, Claudio, 20094 Corsico (Milano) (IT)
(74) Representative: Colombo, Stefano Paolo

(57) **Abstract**

A method of restoring a path in a telecommunication transoceanic ring should said ring experience a ring failure. The ring comprising a plurality of nodes, protection fiber or channels and working fiber or channels connecting the nodes in a closed loop; the original path being a unidirectional path installed through the working fiber between a source node and a plurality of destination nodes; in case of failure, at least one of the nodes becoming a node adjacent to the ring failure. The method including the step of performing a Bridge operation at the source node so that the path is also transmitted on the protection fiber in the opposite direction to the original path direction and being characterized by further comprising the step of performing, at each of destination nodes no longer receiving the path because of the failure, possibly excluding that/those adjacent to the ring failure, a Switch & Continue or Drop & Continue operation.

## Description

The present invention relates to the field of fiber optic transmission and in particular to the field of fiber optic SDH transoceanic communication networks of MS-SP Ring type. Still more in particular, it concerns a method of restoring the unidirectional path from a source node to a plurality of destination nodes of a transoceanic MS-SP Ring in the instance where a failure occurs.

In present telecommunication networks it is becoming extremely important to have the possibility of solving, in the most effective manner, the problems related to the failures possibly occurring in the networks themselves by optimizing the restoration of the installed traffic. Such a need is of course much more felt in the transoceanic rings wherein the so-called path, i.e. the interconnection between a source node of the transoceanic ring and a destination node, is generally very long, on the order of thousand kilometers. It should be noted that "transoceanic ring" means a telecommunication ring involving rather long distances, not necessarily a ring crossing an ocean.

A much more specific case is represented by the so-called unidirectional broadcast paths, namely unidirectional paths going from a source node to a plurality of destination nodes which all receive the same signal.

A ring failure, as defined by the International Communication Union (ITU) in the various related Recommendations, is a failure affecting the capacity of both the working and the protection fibers in a fiber span, or a failure at a ring node (or network element). In the case of transoceanic MS-SP Rings (Multiplex Section - Shared Protection Rings), the basic rule indicated by the Annex A of (TU-T Recommendation G.841 to restore the traffic in the event that a ring failure occurs, simply states that the source node must execute a path bridge operation, whilst the destination node must perform a switch operation. That is to say, each direction of the bi-directional path must be bridged by its source node on the protection fiber away from the failure and it must be received by its destination node of the protection fiber away from the failure.

This simple solution is valid in the event of single failure at an MS-SP Ring wherein the path connects a source node with only one destination node but it proves to be insufficient in the case where the unidirectional path connects several destination nodes. In fact, even if one thinks to apply the same rule to the case of broadcast paths, i.e. by considering each destination node as the destination node mentioned in the above-cited rule, the result would be that each destination node should execute only one switch of its extracted path. Thus, when the failure occurs between the source node and the first destination node, only one destination node (the one that at the beginning was the farthest destination node) will receive the path; when, instead, the failure occurs between two destination nodes, the sole nodes that will receive the path will be those upstream of the failure (on the direction of the original path) and the one that at the beginning was the farthest node: in any case only some of the destination nodes will receive the path.

In view of the prior art inconveniences, it is the main object of the present invention to provide a method of recovering the unidirectional paths between a source node and several destination nodes in the case of transoceanic MS-SP Rings which, in case of ring failure, allows all destination nodes to receive the paths.

This and further objects are achieved by the method according to the present invention having the features set forth in the independent claim 1. Further advantageous characteristics of the method according to the present invention are set forth in the dependent claims. The invention further concerns a telecommunication transoceanic ring having the features set forth in the independent claim 4.

The basic idea of the present invention consists in causing not only that the source node performs a bridge operation, but also that all the destination nodes no longer reachable by the original path perform a Drop & Continue or Switch & Continue operation (substantially a switching operation for extracting the path from the protection channel away from the failure and then for continuing it).

Thus, the method according to the invention is able to restore a path in a telecommunication transoceanic ring should said ring experience a ring failure; the ring comprising a plurality of nodes, protection fiber or channels and working fiber or channels connecting the nodes in a closed loop; the original path being a unidirectional path installed through the working fiber between a source node and a plurality of destination nodes; in case of failure, at least one of the nodes becoming a node adjacent to the ring failure, said method includes the step of performing a Bridge operation at the source node so that the path is also transmitted on the protection fiber in the opposite direction to the original path direction and is characterized by further comprising the step of performing, at each of destination nodes no longer receiving the path because of the failure, possibly excluding that/those adjacent to the ring failure, a Switch & Continue or Drop & Continue operation.

The present invention also includes a telecommunication transoceanic ring protected against ring failures, said ring comprising a plurality of nodes, protection fiber or channels and working fiber or channels connecting the nodes in a closed loop with a original unidirectional path being installed through the working fiber between a source node and a plurality of destination nodes, at least one of the nodes, in case of failure, becoming a node adjacent to the ring failure, the source node comprising means for performing a Bridge operation so that the path is also transmitted on the protection fiber in the opposite direction to the original path direction. The ring is characterized in that each of destination nodes no longer receiving the path because of the failure, possibly excluding that/those adjacent to the ring failure, comprises means for performing a Switch & Continue or Drop & Continue operation.

The present invention will become clear after reading the following detailed description, given as an exemplifying and non limiting example, wherein the various figures show:
- Fig. 1 diagrammatically illustrates a transoceanic MS-SP Ring with a unidirectional path interrupted by a failure and restored according to the known, and at present provided, procedure;
- Fig. 2 diagrammatically illustrates a transoceanic MS-Spring in which a unidirectional path, interrupted by a failure and restored according to the method of the present invention, has been installed; and
- Fig. 3 is similar to Fig. 2 but it considers a failure in another position.

In the various figures, the same reference numerals will be used to designate the same parts or functionally equivalent components. All the figures represent a four-fiber ring with the working fiber being indicated through gray harrows and the protection (or spare) fiber being indicated in white harrows. The original path, namely the path before the failure, has been indicated by a continuous line while the new path, namely the path after the failure, has been indicated by a dashed line. Finally, the failure has been indicated by an "irregular star".

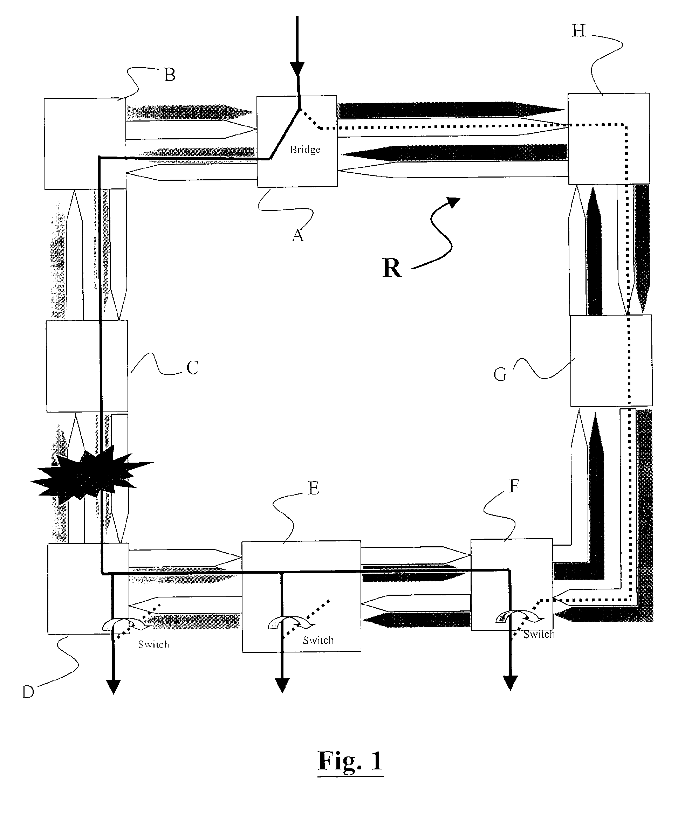

Fig. 1 substantially illustrates the state of the art related to a transoceanic ring in which a broadcast path, i.e. a unidirectional path from a source node A to a plurality of destination nodes (D, E, F), has been installed. In the case where a ring failure occurs, for instance between nodes C and D, the source node A will bridge the path on the protection fiber up to the node F, that was one of the destination nodes, which will performs a switch operation; at any rate, the other destination nodes D and E of the ring R will not receive the path.

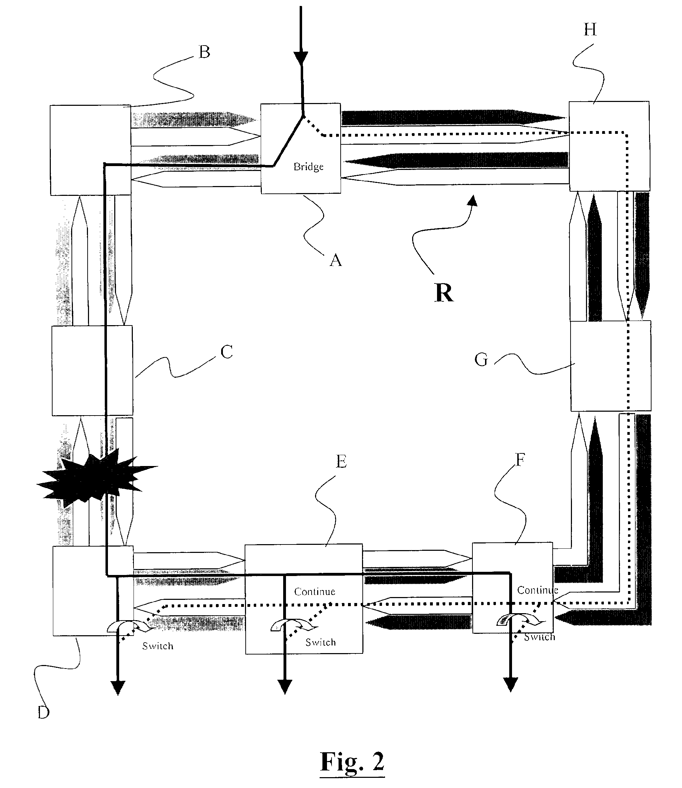

Fig. 2 illustrates the situation, according to the present invention, in the event of a failure at the same location. The source node A, being informed of the failure, will perform a path Bridge by utilizing the protection fiber of the other semi-ring. The path, along the protection fiber, will reach the node F which was previously considered as the farthest node and which will perform a Switch & Continue (or Drop & Continue) operation and not a mere Switch operation. Analogous operation will also be performed by node E that receives the path from the adjacent node F along the protection fiber. The path, continued through by node E, will reach node D, which was previously the closest node to the source node A, again along the protection fiber. Now, with the new path, the node D is the farthest node from the source node and therefore it shall simply perform a Switch operation to extract the path.

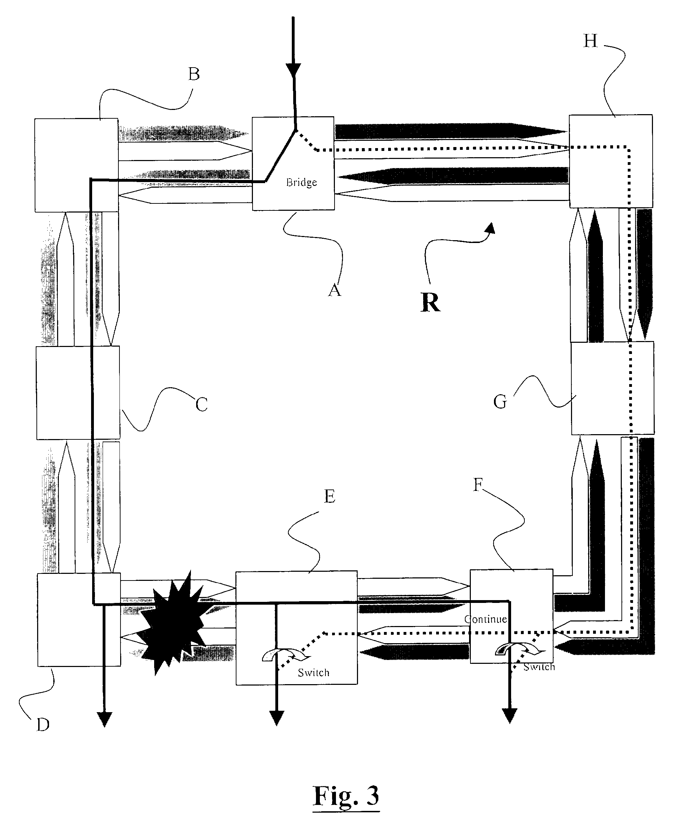

The situation is slightly different in the case where the failure occurs downstream of one of the destination nodes as illustrated in Fig. 3. The source node A, being informed of the failure location, will nevertheless perform a path Bridge operation. In this manner the node D will receive the path along the working fiber as if the failure had not occurred but the same signal will be received also by node F. This latter will perform a Switch & Continue operation in such a way that the path also arrives at node E, still along the protection fiber. In this scenario, node E results in being the last node and therefore it behaves similarly to node D in the situation of Fig. 2 i.e. it will perform a mere Switch operation.

Hence the telecommunication transoceanic ring R comprises a source node and destination nodes D, E, F connected through a unidirectional broadcast path, said source node A comprising means for bridging the path along the protection fiber in the event of a failure, and is characterized in that said destination nodes, possibly excluding those adjacent to the failure, comprise means for performing a Switch & Continue or Drop & Continue operation. Moreover, the destination node (D in the instance of Fig. 2, E in the instance of Fig. 3) that is reached lastly by the new path along the protection fiber comprises means for performing a Switch operation to simply extract the path without continuing it.

It should be noted that the present invention applies to SDH signals as well as SONET signals. Thus, while both the above description and the annexed claims only refer to SDH signals for clarity reasons, the scope of protection is not limited to those signals but also includes SONET signals. In other words, just for this application and unless otherwise specified, SDH means both SDH and SONET.

There have thus been shown and described a novel method and a novel ring which fulfill all the objects and advantages sought therefor. Many changes, modifications, variations and other uses and applications of the subject invention will, however, become apparent to those skilled in the art after considering the specification and the accompanying drawings which disclose preferred embodiments thereof. All such changes, modifications, variations and other uses and applications which do not depart from the spirit and scope of the invention are deemed to be covered by the invention which is limited only by the claims which follow.

## Claims

1. Method of restoring a path in a telecommunication transoceanic ring (R) should said ring (R) experience a ring failure, the ring (R) comprising a plurality of nodes (A-H), protection fiber or channels and working fiber or channels connecting the nodes (A-H) in a closed loop; the original path being a unidirectional path installed through the working fiber between a source node (A) and a plurality of destination nodes (D-F); in case of failure, at least one of the nodes (D; D, E) becoming a node adjacent to the ring failure, said method including the step of performing a Bridge operation at the source node (A) so that the path is also transmitted on the protection fiber in the opposite direction to the original path direction, characterized by further comprising the step of performing, at each of destination nodes (E, F; F) no longer receiving the path because of the failure, possibly excluding that/those (D; D, E) adjacent to the ring failure, a Switch & Continue or Drop & Continue operation.

2. Method according to claim 1, characterized in that the path is continued from a destination node (F, E; F) to a further destination node (E, D; E) through the protection fiber of said telecommunication transoceanic ring (R).

3. Method according to claim 1 or 2, characterized in that the destination node (D; E) lastly reached by the new path along the protection fiber performs a Switch operation.

4. Telecommunication transoceanic ring (R) protected against ring failures, said ring comprising a plurality of nodes (A-H), protection fiber or channels and working fiber or channels connecting the nodes (A-H) in a closed loop with a original unidirectional path being installed through the working fiber between a source node (A) and a plurality of destination nodes (D-F), at least one of the nodes (D; D, E), in case of failure, becoming a node adjacent to the ring failure, said source node (A) comprising means for performing a Bridge operation so that the path is also transmitted on the protection fiber in the opposite direction to the original path direction, characterized in that each of destination nodes (E, F; F) no longer receiving the path because of the failure, possibly excluding that/those (D; D, E) adjacent to the ring failure, comprises means for performing a Switch & Continue or Drop & Continue operation.

5. Transoceanic ring (R) according to claim 4, characterized in that the destination node (D; E) which is lastly reached by the new path along the protection fiber comprises means for performing a Switching operation to simply extract the path without continuing it.
